# EUROPÄISCHE PATENTSCHRIFT

(11) **EP 1 465 795 B1**
(45) Veröffentlichungstag und Bekanntmachung des Hinweises auf die Patenterteilung: **10.08.2005**
(21) Anmeldenummer: 03702334.8
(22) Anmeldetag: 16.01.2003
(51) Int. Cl.: B60R 22/44, B60R 22/46

(54) **SICHERHEITSGURT**
SEAT-BELT
CEINTURE DE SECURITE

(30) Priorität: 18.01.2002 DE 10202047
(43) Veröffentlichungstag der Anmeldung: 13.10.2004
(73) Patentinhaber: Siemens Aktiengesellschaft, 80333 München (DE)
(72) Erfinder: VIERNEKES, Gerald, 97437 Hassfurt (DE)
(86) Internationale Anmeldenummer: PCT/DE2003/000112
(87) Internationale Veröffentlichungsnummer: WO 2003/059706

(56) Entgegenhaltungen:
- EP-A- 0 858 935
- EP-A- 0 893 313
- DE-A- 4 302 042
- DE-A- 4 332 205

## Beschreibung

Zum Zwecke, dass ein moderner Sicherheitsgurt im Falle eines Falles richtig anliegt, sind bei bekannten Gurtaufrollvorrichtungen mehrere Komponenten verantwortlich: Eine Feder sorgt für die nötige Spannung des Gurtes, eine Sprengladung zieht bei einem Unfall überflüssige Gurtlose ein, eine Klinke verhindert das weitere Ausrollen und ein Torsionsstab begrenzt die Gurtkraft auf ein verträgliches Maß. Diese Aufgaben kann ein elektrischer Multifunktionsaufroller über nehmen, der mit seiner intelligenten Steuerung neue Möglichkeiten für mehr Sicherheit und zusätzlichen Komfort eröffnet. Ein solcher Multifunktionsaufroller ist aus den EP 0 893 313 A bekannt, die dem Oberbegriffs des Anspruchs entspricht.

Aufgabe der Erfindung ist es, die Positionierungstraffung im Crash-Fall zu verbessern. Diese Aufgabe wird durch die Merkmale des Anspruchs gelöst.

Registriert die Steuereinheit anhand der Daten von ESP, ABS oder der Airbagsteuerung eine Krisensituation, strafft der Multifunktionsaufroller in Sekundenbruchteilen den Gurt. Bei entsprechenden Sensoren und vorzugsweise einem 42-Volt-Bordnetz kann der Multifunktionsaufroller die Passagiere vor einem möglichen Unfall sogar in eine sichere Position ziehen, damit etwa ein Beifahrer, der sich gerade die Schuhe bindet, nicht direkt vom Airbag getroffen wird. Große Vorteile hat die neue Technik in den ersten Sekundenbruchteilen nach dem Crash, denn in dieser Phase variiert der elektrische Multifunktionsaufroller die Gurtkraft gezielt: Große und schwere Insassen werden kräftiger abgebremst als leichte oder kleine Passagiere. Damit ist sichergestellt, dass jeder Beifahrer zum optimalen Zeitpunkt in den Airbag fällt und so den größtmöglichen Schutz erfährt.

Nach einer Ausgestaltung der Erfindung ist die Auslöseschwelle des elektrischen Multifunktionsaufrollers deutlich niedriger angesetzt als bei konventionellen Systemen, weil die Reaktion vollkommen reversibel ist. Schon bei Verdacht auf eine heraufziehende Gefahr werden deshalb die komplette Sicherheitsroutine gestartet und der Gurt gestrafft. Wenn der Unfall dann im letzten Moment doch noch vermieden wird, lässt der Elektromotor des Multifunktionsaufrollers einfach wieder locker.

Der erfindungsgemäße elektrische Multifunktionsaufroller erhöht nicht nur die Sicherheit, mit ihm lässt sich auch der Komfort im Fahrzeug deutlich steigern. So lassen sich individuelle, den Markencharakter eines Fahrzeuges unterstreichende Komforteinstellungen realisieren, ohne dabei Sicherheitseinbußen in Kauf zu nehmen; insbesondere ist es möglich, den Gurt automatisch und regelmäßig nachzuspannen, etwa in Abhängigkeit von der Temperatur. Eine Klimaerfassung schließt bei kalten Temperaturen auf dicke Kleidung und damit eine erhöhte Spannkraft. Umgekehrt werden die Passagiere bei warmem Wetter von einer strammen Gurtkraft erlöst. Und auch der jeweilige Fahrstil kann berücksichtigt werden: Auf langen und ruhigen Passagen sitzt der Gurt etwas lockerer, während bei schnellen Passfahrten ein stärker gestraffter Gurt ein sportliches Fahrgefühl unterstützt. Unabhängig von der jeweiligen Komfort-Einstellung reichen in kritischen Momenten wenige Sekundenbruchteile aus, um den perfekten Schutz zu gewährleisten.

## Patentansprüche

1. Sicherheitsgurt mit einer Funktion zur Sicherung einer Mindestspannung, mit einer Funktion zum Einzug einer überschüssigen Gurtlose im Crash-Fall und mit einer Funktion zur Begrenzung einer bedienerfreundlichen auf die zu sichernde Person maximal einwirkenden Gurtkraft und einen elektrischen Multifunktionsgurtaufroller mit einem in Abhängigkeit von einer Steuereinheit gesteuerten elektrischen Antriebsvorrichtung, insbesondere einem Elektromotor, zur Erfüllung der Funktionen, **dadurch gekennzeichnet, dass** die elektrische Antriebsvorrichtung die überschüssige Gurtlose im Crash-Fall in Abhängigkeit von Masse bzw. Gewicht der durch den Sicherheitsgurt zu sichernden Person einzieht.

## Claims

1. Seatbelt with a function for ensuring a minimum tension, with a function for retracting superfluous belt slack in the event of a crash and with a function to limit a user-friendly belt force acting as a maximum on the person to be secured and an electrical multifunction belt retractor with an electrical drive device controlled as a function of a control unit, in particular an electric motor, to fulfil the functions, **characterised in that**, in the event of a crash, the electrical drive device retracts the superfluous belt slack as a function of the mass and/or weight of the person to be secured by the seatbelt.

## Revendications

1. Ceinture de sécurité comportant une fonction pour garantir une tension minimale, comportant une fonction pour rétracter un relâchement excédentaire de la ceinture en cas de collision et comportant une fonction pour limiter une force de la ceinture agréable pour l'utilisateur et agissant de façon maximale pour la personne à mettre en sécurité, et un enrouleur électrique de ceinture multifonctions comportant un dispositif électrique d'entraînement commandé en dépendant d'une unité de commande, en particulier un moteur électrique, pour remplir ces fonctions,
**caractérisé en ce que** le dispositif électrique d'entraînement rétracte le relâchement excédentaire de la ceinture en cas d'une collision, en fonction de la masse ou respectivement du poids de la personne à mettre en sécurité au moyen de la ceinture de sécurité.
